# FASCICULE DE BREVET EUROPEEN

(11) **EP 2 538 762 B1**
(45) Date de publication et mention de la délivrance du brevet: **25.12.2013**
(21) Numéro de dépôt: 11712930.4
(22) Date de dépôt: 17.02.2011
(51) Int. Cl.: A01B 73/04, A01C 7/20

(54) **SEMOIR REPLIABLE PERFECTIONNE**
VERBESSERTE ZUSAMMENKLAPPBARE SÄMASCHINE
IMPROVED FOLD-AWAY SEED DRILL

(30) Priorité: 23.02.2010 FR 1051271
(43) Date de publication de la demande: 02.01.2013
(73) Titulaire: KUHN S.A., 67700 Saverne (FR)
(72) Inventeur: AUDIGIE, Jean-Charles, F-67330 Bouxwiller (FR)
(74) Mandataire: Esch, Esther Evelyne
(86) Numéro de dépôt international: PCT/FR2011/050342
(87) Numéro de publication internationale: WO 2011/104467

(56) Documents cités:
- EP-A1- 0 420 734
- EP-A1- 1 356 720
- DE-A1- 4 303 101
- DE-A1- 10 040 056
- US-A- 6 003 615

## Description

La présente invention se rapporte au domaine technique général du machinisme agricole. L'invention concerne un semoir comportant un châssis avec une poutre transversale sensiblement horizontale sur laquelle sont répartis de manière régulière des éléments semeurs, ladite poutre transversale présente un tronçon central et deux tronçons latéraux disposés de part et d'autre dudit tronçon central dans une position de travail et étant relevés sensiblement au-dessus dudit tronçon central dans une position de transport, chaque tronçon latéral étant lié audit châssis au moyen d'un bras respectif et étant déplaçable transversalement et verticalement par rapport audit châssis au moyen d'un mécanisme déformable commandé par un vérin de manoeuvre.

Un tel semoir avec un châssis repliable est par exemple présenté dans le prospectus "MAXIMA 2 Semoirs pneumatiques de précision" de KUHN S.A. Il comporte un châssis avec une poutre transversale sur laquelle sont répartis des éléments semeurs à écartements constants et réglables. La poutre transversale est constituée d'un tronçon central fixe et de deux tronçons latéraux. Les tronçons latéraux sont reliés au châssis via un bras respectif. Ce semoir porté présente une largeur de travail de 6m lorsque les tronçons latéraux s'étendent de part et d'autre du tronçon central avec un gabarit routier de 3m en largeur. Pour le transport, les tronçons latéraux sont relevés transversalement et verticalement au-dessus du tronçon central pour le transport via un mécanisme déformable commandé par un vérin de manoeuvre. Le mécanisme déformable présente une bielle liée à un levier au moyen d'une articulation supérieure d'axe horizontal et dirigé dans le sens d'avance. Un autre semoir, avec des caractéristiques semblables, est connu de DE 100 40 056.

Comme une largeur de travail de 6m ne permet pas de circuler sur les routes, le semoir est replié pour diminuer l'encombrement en largeur dans une mesure suffisante pour permettre des déplacements sur la route. Dans cette position de transport, les tronçons latéraux sont disposés l'un contre l'autre au-dessus du tronçon central. Les bras ainsi que les bielles s'étendent sensiblement verticalement. Par cette disposition bout-à-bout des tronçons latéraux dans la position de transport, les limites du gabarit routier selon la législation routière sont atteintes. Ainsi, il n'est pas possible d'augmenter la largeur de travail de ce semoir sans dépasser les limites du gabarit routier règlementaire.

La présente invention a pour but de proposer un semoir présentant une largeur de travail plus importante avec un châssis robuste et stable et respectant le gabarit autorisé pour les déplacements sur les routes.

A cet effet, une importante caractéristique de l'invention consiste en ce qu'un mécanisme déformable est décalé par rapport à l'autre mécanisme déformable compte tenu de la direction d'avance. Ce décalage permet aux mécanismes déformables de se croiser en passant l'un à côté de l'autre afin d'obtenir un semoir particulièrement compact dans la position de transport.

Selon l'invention, au moins une articulation s'étend au-delà du plan vertical médian du semoir dans la position de transport. Grâce à cette caractéristique, le semoir, tout en ayant une largeur de travail plus importante, respecte l'encombrement en largeur et en hauteur du gabarit routier.

Selon une autre importante caractéristique, chaque articulation s'étend au-delà du plan médian du semoir dans la position de transport. De cette manière, le gabarit routier est respecté en ce qui concerne la largeur de transport du semoir replié. L'encombrement en hauteur est également réduit. Cette réduction de hauteur permet avantageusement d'augmenter la garde au sol du semoir. Ce dégagement supplémentaire par rapport au sol facilite les déplacements sur les chemins accidentés.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente, en vue de face, un semoir selon la présente invention dans une position de transport,
- la **figure 2** est une vue de face du semoir de l'invention dans une position de travail,
- la **figure 3** représente une vue de dessus du semoir selon l'invention.

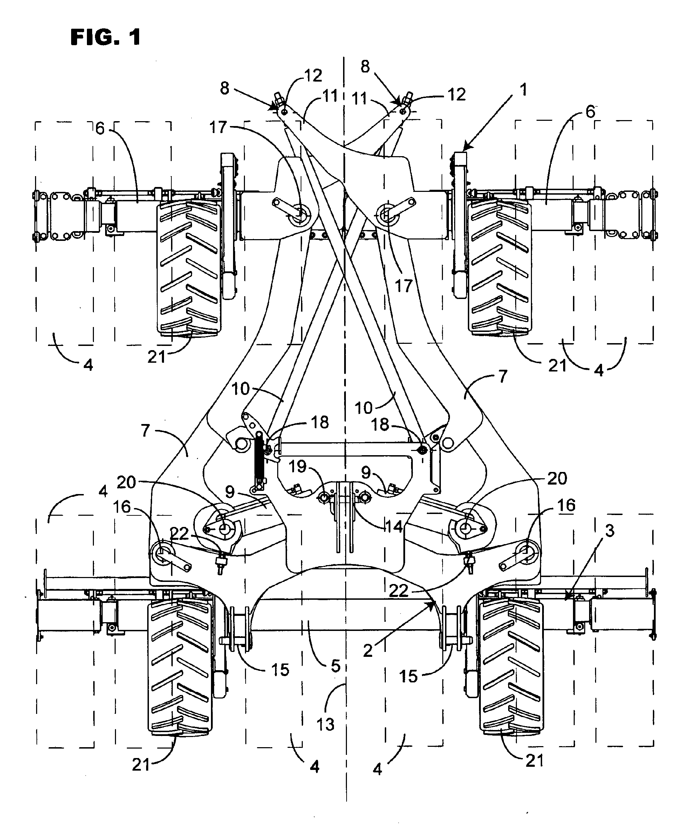

La machine agricole selon l'invention est un semoir (1) du type monograine ou semoir à éléments. Un tel semoir (1) distribue les graines une à une sur la ligne de semis à des écartements constants. La figure 1 représente, en vue de face, un tel semoir en position de transport. Le semoir (1) comporte un châssis (2) constitué d'une poutre transversale (3) sensiblement horizontale sur laquelle sont répartis de manière régulière des éléments semeurs (4). Les éléments semeurs (4) sont représentés sous forme schématique sur les figures. La poutre transversale (3) présente un tronçon central (5) et deux tronçons latéraux (6). Les tronçons latéraux (6) sont disposés de part et d'autre dudit tronçon central (5) dans une position de travail. Les tronçons latéraux (6) sont relevés sensiblement au-dessus dudit tronçon central (5) dans une position de transport. Chaque tronçon latéral (6) est lié audit châssis (2) au moyen d'un bras respectif (7). Il est déplaçable transversalement et verticalement par rapport au châssis (2) au moyen d'un mécanisme déformable (8) respectif commandé par un vérin de manoeuvre (9). Chaque mécanisme déformable (8) présente une bielle (10) liée à un levier (11) au moyen d'une articulation (12) d'axe sensiblement horizontal et parallèle à la direction d'avance (A). Les tronçons latéraux (6) sont disposés de part et d'autre du plan vertical médian (13) du semoir (1) ou du châssis (2). Les éléments semeurs (4) sont avantageusement répartis symétriquement sur la poutre transversale (3) par rapport au plan vertical médian (13).

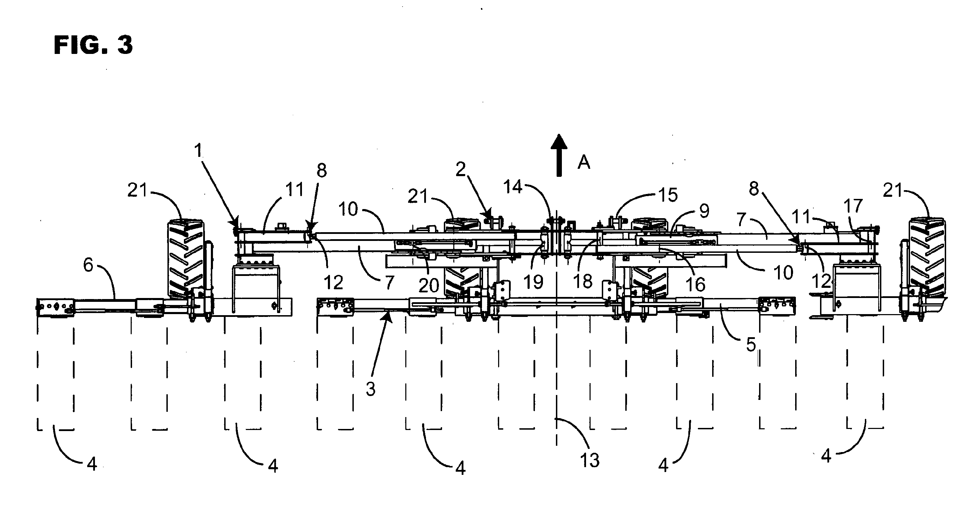

Selon une importante caractéristique de l'invention, un mécanisme déformable (8) est décalé par rapport à l'autre mécanisme déformable compte tenu de la direction d'avance (A). Sur la figure 3, représentant une vue de dessus du semoir (1), le mécanisme déformable (8) disposé à gauche, compte tenu de la direction d'avance (A), s'étend plus en avant que le mécanisme déformable (8) disposé à droite. Ce décalage permet aux mécanismes déformables (8) de se croiser en passant l'un à côté de l'autre afin d'obtenir un semoir particulièrement compact dans la position de transport. Chaque mécanisme déformable (8) s'étend sensiblement dans l'encombrement en largeur du bras (7) correspondant. La bielle (10) et le levier (11) du côté gauche sont décalés en avant par rapport à la bielle (10) et au levier (11) du côté droit. La largeur de la bielle (10) est inférieure à la largeur du bras (7) correspondant. De préférence, la largeur d'un bras (7) correspond au double de la largeur d'une bielle (10).

Selon un autre aspect de l'invention, au moins une articulation (12) s'étend au-delà du plan vertical médian (13) du semoir (1) dans la position de transport. De cette façon, on obtient un repliage compact pour le transport. L'articulation (12) présente un axe sensiblement horizontal et parallèle à la direction d'avance (A). Ainsi, le semoir tout en ayant une largeur de travail plus importante respecte l'encombrement en largeur du gabarit routier.

A la lumière de la figure 1, la conception du châssis (2) est avantageusement symétrique par rapport au plan vertical médian (13). De par cette conception, les sollicitations sont avantageusement symétriques lors du travail et lors du transport. Le semoir (1) est donc bien équilibré et stable. Les tronçons latéraux (6) sont repliés au-dessus du tronçon central (5) et sont avantageusement alignés. Les extrémités internes des deux tronçons latéraux (6) sont disposées bout-à-bout, ceci permet de rigidifier le châssis lors des déplacements.

Selon une autre importante caractéristique de l'invention, chaque articulation (12) s'étend au-delà du plan vertical médian (13) du semoir (1) dans la position de transport. Les articulations (12) en se repliant au-delà du plan vertical médian (13) permettent de réduire encore davantage l'encombrement en largeur. L'encombrement en hauteur du semoir (1) est également réduit autorisant un dégagement par rapport au sol supplémentaire. Le gabarit routier est donc respecté lors du transport en ce qui concerne la largeur et la hauteur du semoir.

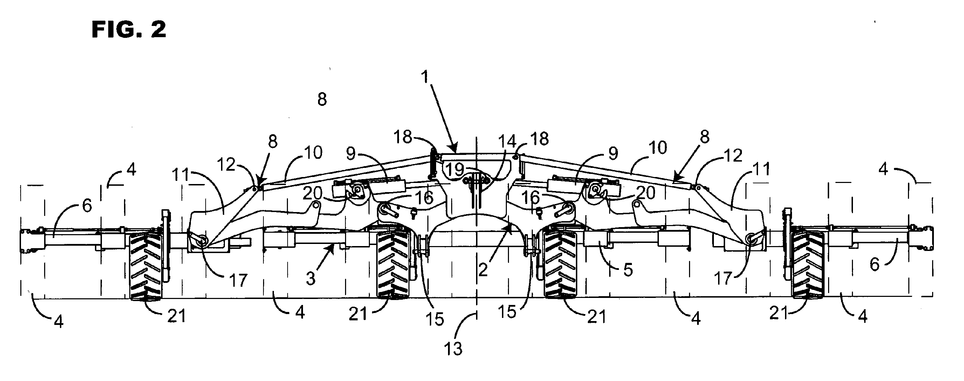

La figure 2 représente le semoir (1) dans une position de travail. Le châssis (2) est muni d'un attelage de type trois points composé d'un point d'attelage supérieur (14) et de deux points d'attelage inférieurs (15). Ce semoir (1) est destiné à être attelé au système d'attelage d'un tracteur (non représenté), il est porté par le tracteur. Le tracteur déplace et anime le semoir (1) suivant une direction et un sens d'avance indiqué par la flèche (A). Dans la suite de la description, les notions suivantes "avant", "arrière" et "devant", " derrière" sont définies par rapport au sens d'avance (A) et les notions "droite" et "gauche" sont définies en regardant le semoir (1) de l'arrière dans ledit sens d'avance (A).

Dans la position de travail, les tronçons latéraux (6) sont alignés et s'étendent dans le prolongement du tronçon central (5). Les bras (7) articulés entre le châssis (2) et le tronçon latéral (6) respectif s'étendent sensiblement horizontalement. L'articulation (12) est disposée au niveau de l'extrémité extérieure de la bielle (10). La bielle (10) s'étend au-dessus du bras (7). Le mécanisme déformable (8) s'étend sensiblement au-dessus du bras (7) de manière à former un quadrilatère déformable et de préférence un parallélogramme. Ainsi, chaque tronçon latéral (6) effectue un déplacement sensiblement parallèle au sol de la position de travail à la position de transport, et inversement. L'articulation (12) réalise l'arête supérieure extérieure du mécanisme déformable (8) respectivement du parallélogramme, cette articulation (12) est également appelée articulation extérieure. Le bras (7) est relié d'une part au châssis (2) via une première articulation (16) d'axe sensiblement horizontal et dirigé dans le sens d'avance (A) et d'autre part au levier (11) respectif au moyen d'une deuxième articulation (17) d'axe sensiblement horizontal et dirigé dans le sens d'avance (A). La bielle (10) est, quant à elle, reliée d'une part au châssis (2) via une articulation intérieure (18) d'axe sensiblement horizontal et dirigé dans le sens d'avance (A) et d'autre part au levier (11) respectif au moyen de l'articulation extérieure (12). Chaque vérin de manoeuvre (9) s'étend entre le châssis (2) et le bras (7) respectif. Le vérin est articulé sur le châssis via une troisième articulation (19) et articulé sur le bras (7) via une quatrième articulation (20). La troisième articulation (19) et la quatrième articulation (20) présentent chacune un axe sensiblement horizontal et parallèle à la direction d'avance (A).

Le semoir de l'invention présente une grande largeur de travail, préférentiellement de 9 mètres. Une telle largeur de travail impose donc un repliage des tronçons latéraux (6) pour les déplacements sur les routes et chemins. Le châssis (2) supporte des éléments semeurs (4) répartis à écartements constants et réglables sur la poutre transversale (3). Chaque élément semeur (4) possède une trémie, un dispositif de dosage et un dispositif d'implantation. Le montage de l'élément semeur (4) sur le châssis (2) se fait au moyen d'un parallélogramme déformable qui lui permet de se déplacer parallèlement au sol. Afin de garantir un dosage homogène des graines, la vitesse de rotation du dispositif de dosage est avantageusement proportionnelle à la vitesse d'avance du semoir (1). Dans l'exemple de réalisation représenté sur la figure 2, le châssis (2) supporte douze éléments semeurs (4). Les tronçons (5, 6) sont constitués d'une poutre télescopique double. La conception du châssis (2) permet de modifier l'écartement des éléments semeurs (4) selon une grande amplitude, de 70 à 80 cm. Le tronçon central (5) porte six éléments semeurs (4) et chaque tronçon latéral (6) porte trois éléments semeurs (4).

Les éléments semeurs (4) sont représentés de manière simplifiée au moyen d'un cadre en traits discontinus indiquant l'encombrement en hauteur et en largeur des éléments semeurs (4). Ces éléments semeurs (4) ont comme particularité que le dispositif de dosage est disposé au-dessus du dispositif d'implantation, ce qui fait qu'il possède une hauteur importante avec une longueur réduite. Il existe d'autres éléments semeurs pour lesquels le dispositif de dosage est disposé devant le dispositif d'implantation, entraînant un encombrement en longueur plus important avec une hauteur réduite.

Lors du travail, le châssis (2) s'appuie sur le sol au moyen de roues (21). Dans l'exemple de la figure 2, deux roues (21) sont liées sur le tronçon central (5), une roue (21) est liée à chaque tronçon latéral (6). Ces roues (21) sont destinées à entraîner le dispositif de dosage des éléments semeurs (4). On remarque que les roues (21) sont placées devant la poutre transversale (3). Avec cette disposition à l'avant, les roues (21) ne sont pas intercalées entre les éléments semeurs (4) et les possibilités de réglage de l'écartement entre les éléments semeurs (4) ne sont pas limitées. D'autre part, la position de chaque roue (21) peut être adaptée aux différents écartements des éléments semeurs (4) pour qu'elle puisse rouler entre deux lignes de semis.

Etant donné que la roue (21) est accrochée dans la partie centrale du tronçon latéral (6), la liaison du tronçon latéral (6) avec le bras (7) est réalisée au niveau de son extrémité interne. Pour s'adapter à l'écartement souhaité des éléments semeurs (4), les tronçons latéraux (6) sont montés de manière réglable sur les bras (7).

Pour réduire l'encombrement de ce semoir de grande largeur lors du transport sur la route, les tronçons latéraux (6) sont repliés verticalement et transversalement au moyen des vérins de manoeuvre (9). Selon la figure 1, les éléments semeurs (4) sont ainsi disposés symétriquement sur deux hauteurs. Lors du repliage, le châssis (2) passe d'une largeur au travail de 9m à une largeur de transport de 3m50 avec des poutres télescopiques simples. Une telle configuration est conforme à la législation routière en France. Grâce aux poutres télescopiques doubles des tronçons (5, 6) qui se replient, l'encombrement en largeur est réduit à 3m. Ce repliage permet de diminuer l'encombrement en largeur dans une mesure suffisante pour permettre un déplacement sur la route dans un grand nombre de pays européens. L'encombrement du semoir (1) au transport respecte donc le gabarit routier de 3m en largeur et 4m de hauteur. En fonction du gabarit routier recherché, les tronçons (5, 6) sont composés soit d'une poutre télescopique double soit d'une poutre télescopique simple. Grâce au mécanisme déformable (8) à parallélogramme, les éléments semeurs (4) restent sensiblement à l'horizontal lors du repliage, ceci évite que les graines contenues dans les trémies ne soient versées.

D'une manière préférentielle, chaque articulation (12) s'étend sensiblement au-dessus de la roue (21) correspondante du tronçon central (5). La position de la première articulation (16) permet de définir l'encombrement en largeur du semoir (1) dans la position de transport. La position des deux tronçons latéraux (6) pour le transport est réglée par des butées respectives (22). Ces butées (22) sont réglées pour que les extrémités internes des tronçons latéraux (6) soient en contact l'une avec l'autre. Pour le déplacement en toute sécurité du semoir sur les routes, chaque bras (7) est verrouillé sur le châssis (2) via un crochet respectif.

Selon un exemple de réalisation non représenté, le semoir de l'invention est traîné c'est-à-dire que le châssis s'appuie sur le sol lors du travail et lors du transport à l'aide de roues.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) comportant un châssis (2) avec une poutre transversale (3) sensiblement horizontale sur laquelle sont répartis de manière régulière des éléments semeurs (4), ladite poutre transversale (3) présente un tronçon central (5) et deux tronçons latéraux (6) disposés de part et d'autre dudit tronçon central dans une position de travail et étant relevés sensiblement au-dessus dudit tronçon central (5) dans une position de transport, chaque tronçon latéral (6) étant lié audit châssis (2) au moyen d'un bras respectif (7) et étant déplaçable transversalement et verticalement par rapport audit châssis (2) au moyen d'un mécanisme déformable (8) commandé par un vérin de manoeuvre (9), un mécanisme déformable (8) étant décalé par rapport à l'autre mécanisme déformable compte tenu de la direction d'avance (A), ***caractérisé en ce que*** chaque mécanisme déformable (8) présente une bielle (10) liée à un levier (11) au moyen d'une articulation (12) d'axe sensiblement horizontal et parallèle à la direction d'avance (A) et qu'au moins une articulation (12) s'étend au-delà du plan vertical médian (13) du semoir (1) dans la position de transport

2. Semoir selon la revendication 1, ***caractérisé en ce que*** chaque articulation (12) s'étend au-delà du plan vertical médian (13) du semoir (1).

3. Semoir selon la revendication 1 ou 2, ***caractérisé en ce que*** ladite articulation (12) s'étend au-dessus dudit bras respectif (7) dans la position de travail.

4. Semoir selon l'une quelconque des revendications 1 à 3, ***caractérisé en ce que*** l'encombrement en largeur dudit bras (7) correspond au double de la largeur de ladite bielle (10) correspondante.

5. Semoir selon l'une quelconque des revendications 1 à 4, ***caractérisé en ce que*** chaque mécanisme déformable (8) est un quadrilatère du type parallélogramme.

6. Semoir selon l'une quelconque des revendications 1 à 5, ***caractérisé en ce que*** chaque mécanisme déformable (8) s'étend sensiblement dans l'encombrement en largeur du bras (7) correspondant.

7. Semoir selon l'une quelconque des revendications 1 à 6, ***caractérisé en ce que*** des roues (21) sont montées à l'avant de ladite poutre transversale (3).

8. Semoir selon la revendication 7, ***caractérisé en ce que*** ledit bras (7) est lié au châssis (2) au moyen d'une première articulation (16) d'axe sensiblement horizontal et parallèle à la direction d'avance (A), ladite première articulation (16) s'étend dans le voisinage de ladite roue (21) montée sur ledit tronçon central (5).

9. Semoir selon l'une quelconque des revendications 1 à 8, ***caractérisé en ce que*** dans la position de transport, les éléments semeurs (4) sont répartis sur deux hauteurs.

## Patentansprüche

1. Sämaschine (1) mit einem Rahmen (2) mit einem im Wesentlichen horizontalen Querträger (3), auf dem regelmäßig Säelemente (4) verteilt sind, wobei der Querträger (3) einen zentralen Abschnitt (5) und zwei seitliche Abschnitte (6) umfasst, die beiderseits des zentralen Abschnitts in einer Arbeitsstellung angeordnet und in einer Transportstellung im Wesentlichen über den zentralen Abschnitt (5) angehoben werden, wobei jeder seitliche Abschnitt (6) mit dem Rahmen (2) mittels eines jeweiligen Arms (7) verbunden und quer und vertikal in Bezug zum Rahmen (2) mittels eines verformbaren Mechanismus (8), der von einem Betätigungszylinder (9) gesteuert wird, verschiebbar ist, wobei ein verformbarer Mechanismus (8) in Bezug zu dem anderen verformbaren Mechanismus bei Betrachtung der Vorschubrichtung (A) versetzt ist, ***dadurch gekennzeichnet,* dass** jeder verformbare Mechanismus (8) einen Lenker (10) aufweist, der mit einem Hebel (11) mittels eines Gelenks (12) mit einer im Wesentlichen horizontalen und zur Vorschubrichtung (A) parallelen Achse verbunden ist, und dass sich mindestens ein Gelenk (12) über die vertikale Mittelebene (13) der Sämaschine (1) in Transportstellung hinaus erstreckt.

2. Sämaschine nach Anspruch 1, ***dadurch gekennzeichnet,* dass** sich jedes Gelenk (12) über die vertikale Mittelebene (13) der Sämaschine (1) hinaus erstreckt.

3. Sämaschine nach Anspruch 1 oder 2, ***dadurch gekennzeichnet,* dass** sich das Gelenk (12) über den jeweiligen Arm (7) in Arbeitsstellung hinaus erstreckt.

4. Sämaschine nach irgend einem der Ansprüche 1 bis 3, ***dadurch gekennzeichnet,* dass** der Platzbedarf des Arms (7) in der Breite der doppelten Breite des entsprechenden Lenkers (10) entspricht.

5. Sämaschine nach irgend einem der Ansprüche 1 bis 4, ***dadurch gekennzeichnet,* dass** der verformbare Mechanismus (8) ein Viereck vom Typ Parallelogramm ist.

6. Sämaschine nach irgend einem der Ansprüche 1 bis 5, ***dadurch gekennzeichnet,* dass** sich jeder verformbare Mechanismus (8) in dem Breitenplatzbedarf des entsprechenden Arms (7) erstreckt.

7. Sämaschine nach irgend einem der Ansprüche 1 bis 6, ***dadurch gekennzeichnet,* dass** Räder (21) vorne am Querträger (3) montiert sind.

8. Sämaschine nach Anspruch 7, ***dadurch gekennzeichnet,* dass** der Arm (7) mit dem Rahmen (2) mittels eines ersten Gelenks (16) mit einer im Wesentlichen horizontalen und zur Vorschubrichtung (A) parallelen Achse verbunden ist, wobei sich das erste Gelenk (16) in der Nähe des auf dem zentralen Abschnitt (5) montierten Rades (21) erstreckt.

9. Sämaschine nach irgend einem der Ansprüche 1 bis 8, **dadurch gekennzeichnet, dass** in der Transportstellung die Säelemente (4) auf zwei Höhen verteilt sind.

## Claims

1. Seeder (1) comprising a chassis (2) with a substantially horizontal transverse beam (3) on which seeding elements (4) are distributed in a regular manner, the said transverse beam (3) has a central section (5) and two lateral sections (6) arranged on either side of the said central section in a work position and being raised substantially above the said central section (5) in a transport position, each lateral section (6) being linked to the said chassis (2) by means of a respective arm (7) and being displaceable transversely and vertically with respect to the said chassis (2) by means of a deformable mechanism (8) controlled by an operating jack (9), one deformable mechanism (8) being offset with respect to the other deformable mechanism, taking into account the direction of advance (A), ***characterized in that*** each deformable mechanism (8) has a connecting-rod (10) linked to a lever (11) by means of an articulation (12) with an axis which is substantially horizontal and parallel to the direction of advance (A) and that at least one articulation (12) extends beyond the median vertical plane (13) of the seeder (1) in the transport position.

2. Seeder according to Claim 1, ***characterized in that*** each articulation (12) extends beyond the median vertical plane (13) of the seeder (1).

3. Seeder according to Claim 1 or 2, ***characterized in that*** the said articulation (12) extends above the said respective arm (7) in the work position.

4. Seeder according to any one of Claims 1 to 3, ***characterized in that*** the occupied space with regard to width of the said arm (7) corresponds to twice the width of the said corresponding connecting-rod (10).

5. Seeder according to any one of Claims 1 to 4, ***characterized in that*** each deformable mechanism (8) is a quadrilateral of the parallelogram type.

6. Seeder according to any one of Claims 1 to 5, ***characterized in that*** each deformable mechanism (8) extends substantially in the occupied space with regard to width of the corresponding arm (7).

7. Seeder according to any one of Claims 1 to 6, ***characterized in that*** wheels (21) are mounted at the front of the said transverse beam (3).

8. Seeder according to Claim 7, ***characterized in that*** the said arm (7) is linked to the chassis (2) by means of a first articulation (16) with an axis which is substantially horizontal and parallel to the direction of advance (A), the said first articulation (16) extends in the vicinity of the said wheel (21) mounted on the said central section (5).

9. Seeder according to any one of Claims 1 to 8, ***characterized in that*** in the transport position, the seeding elements (4) are distributed on two heights.
